# EUROPÄISCHE PATENTANMELDUNG

(11) **EP 3 501 884 A1**
(43) Veröffentlichungstag der Anmeldung: **26.06.2019**
(21) Anmeldenummer: 18020409.1
(22) Anmeldetag: 24.08.2018
(51) Int. Cl.: B60L 53/30, H01H 9/00, H01F 29/02, H02P 13/00, B60L 53/10

(54) **TRANSFORMATORVORRICHTUNG FÜR EINE LADESTATION FÜR DAS ELEKTRISCHE LADEN VON FAHRZEUGEN MIT WENIGSTENS ZWEI LADEPUNKTEN**

(30) Priorität: 19.12.2017 DE 102017130474
(71) Anmelder: Dr. Ing. h.c. F. Porsche AG, 70435 Stuttgart (DE)
(72) Erfinder: Götz, Stefan, 85659 Forstern (DE); Roggendorf, Christoph, 71706 Markgröningen (DE)

(57) **Zusammenfassung**

Transformatorvorrichtung (10) für eine Ladestation (100) für das elektrische Laden von Fahrzeugen mit wenigstens zwei Ladepunkten (110), aufweisend einen Eingangsanschluss (20) für den elektrischen Anschluss an eine elektrische Leistungsquelle, weiter aufweisend wenigstens eine Primärwicklung (30) und in Reihe elektrisch nachgeschaltet zumindest drei elektrisch parallele, galvanisch voneinander getrennte Sekundärwicklungen (40), wobei die Sekundärwicklungen (40) über eine Schaltlogik (50) mit wenigstens zwei Ausgangsanschlüssen (60) der wenigstens zwei Ladepunkte (110) verbunden sind und die Schaltlogik (50) wenigstens zwei Sekundärwicklungen (40) elektrisch parallel mit einem Ausgangsanschluss (60) eines Ladepunktes (110) verbindet.

## Beschreibung

Die vorliegende Erfindung betrifft eine Transformatorvorrichtung für eine Ladestation für das elektrische Laden von Fahrzeugen mit wenigstens zwei Ladepunkten.

Es ist bekannt, dass Ladestationen für elektrisch angetriebene Fahrzeuge mit zwei oder mehr Ladepunkten vorgesehen werden. Dabei können zwei oder mehr Fahrzeuge zeitlich parallel an diesen einzelnen Ladepunkten geladen werden. Die Transformatorvorrichtung dient dabei dazu, zum einen eine Leistungsaufteilung auf die einzelnen Ladepunkte zur Verfügung zu stellen.

Heutige Elektrofahrzeuge erlauben in der Regel zwei Lademodi. Für ein Laden an einem gewöhnlichen Wechselspannungs- oder Drehstromanschluss verfügt ein Fahrzeug über ein Onboard-Ladegerät, das sowohl eine nötige Wandlung in Gleichstrom vornimmt als auch den jeweiligen Ladebetrieb steuert. Dieser AC-Lademodus ist jedoch aufgrund der verfügbaren Anschlussleistung, die in der Regel nicht mehr als 16 A oder 32 A beträgt, und aufgrund der Installation des Ladegerätes mit ausreichend Leistung in der Ladegeschwindigkeit enorm eingeschränkt. Hieraus ergeben sich bei heutigen Elektrofahrzeugen Ladezeiten von mehreren Stunden je 100 km. Aufgrund der hohen Ladezeiten für AC-Laden wurde DC-Schnellladen vorzugsweise mit Gleichspannung entwickelt. Im Gegensatz zum AC-Laden werden die zum Laden hierzu nötigen elektrischen Betriebsmittel und Komponenten nicht im Fahrzeug mitgeführt, sondern von einer fahrzeugexternen Ladesäule bereitgestellt. Die Ladesäule führt den Ladevorgang durch und formt auf Anforderung des Fahrzeuges Spannung und Strom so, wie es für das Laden der jeweiligen Fahrzeugbatterie notwendig ist. Entsprechend vorgesehene DC-Ladeleitungen werden während des Ladevorganges durch diverse Schütze im Fahrzeug elektrisch mit den Polen der Hochvoltbatterie des Fahrzeuges verbunden. Die Leistungen gebräuchlicher DC-Ladestationen beträgt derzeit typischerweise bis zu 50 kW und werden in der Regel direkt aus dem Niederspannungsnetz oder Ortsnetz entnommen.

Wünschenswert wären allerdings Ladeleistungen von mehr als 300 kW, um Ladegeschwindigkeiten von mehr als 20 km/min zu überbieten. Ferner sind Ladespannungen von bis zu 1000 V erstrebenswert, um Batterien zukünftiger Fahrzeuge mit 600 V oder gar über 800 V Batteriespannung zu laden und höhere Ladeleistungen bei geringen Ladeströmen zu erreichen. Beispielhafte Details zum DC-Laden sind unter anderem in IEC 61851 beschrieben. Zur Ladung von Fahrzeugen mit mehr als 300 kW Leistung ist eine Entnahme der Energie aus dem Niederspannungsnetz oder Ortsnetz der Netzstabilität nicht förderlich und ein Anschluss an das Mittelspannungsverteilnetz oder zukünftig gar das Hochspannungsnetz bietet deutliche Vorteile.

Die Patentanmeldeschrift DE 10 2012 212 291 beschreibt ein System zum elektrischen Gleichspannungsladen, das zumindest ein DC/DC-Stellermodul umfassend ein DC/DC-Tiefsetzmodul ohne galvanische Trennung und ein DC/DC-Resonanzwandlermodul mit galvanischer Trennung aufweist.

Die Patentanmeldeschriften DE 10 2015 110 023 und DE 10 2016 123 924 beschreiben Vorrichtungen zur Gleichspannungsladung von elektrischen Fahrzeugen, die in Fachkreisen als split powerline firmieren. Hierbei wird die gewünschte galvanische Trennung der einzelnen Ladeanschlüsse oder Ladepunkte eines Ladeparks vom Energienetz und untereinander durch einen Transformator mit separaten Sekundärwicklungen erreicht. Der Vorteil dieser Technologie liegt in der möglichen Nutzung von kosten- und bauraumgünstigen nicht galvanisch trennenden Betriebsmitteln wie beispielsweise Gleichrichtern, AC/DC-Wandlern und DC/DC-Wandlern im Anschluss an die jeweiligen Sekundärwicklungen. Der genannte Transformator kann dabei mit entsprechenden Wickelverhältnissen aus Nieder-, Mittel- oder Hochspannung gespeist werden. Der Transformator stellt in dieser Technologie einerseits die Energie für die Ladepunkte als auch die galvanische Trennung bereit. Der Wechselstrom der Sekundärwicklungen des Transformators wird hierbei in der Regel durch einen Gleichrichter oder AC/DC-Wandler in einen Gleichstrom umgewandelt, der ferner optional durch einen nachgeschalteten DC/DC-Wandler in der Spannung angepasst und in seinen physikalischen Eigenschaften, beispielsweise der Stromwelligkeit, weiter geformt werden kann. Der Gleichspannungsausgang kann über ein Ladekabel einem Fahrzeug zugeführt werden. Bei den Sekundärwicklungen kann es sich jeweils um ein- oder mehrphasige Wicklungen handeln.

Nachteilhaft bei den bekannten Lösungen und insbesondere der Split-Powerline-Technologie ist es, dass die Anzahl der Ladepunkte an einer Ladestation für eine einzelne Transformatorvorrichtung zu einer deutlichen Steigerung der Komplexität, der Baugröße und der Kosten führt. In der Regel müssen nach dem Stand der Technik Transformatoren für jeden Ladepark und auch Belastungsszenarien der einzelnen Ladepunkte anwendungsspezifisch entwickelt und angepasst werden. Ferner muss insbesondere eine unsymmetrische Ladesituation bzw. eine unsymmetrische Konstruktionssituation unterschiedlicher Ladefunktionen, unterschiedlicher Ladeleistungen bzw. unterschiedlicher Ladepunkte in der Transformatorvorrichtung Berücksichtigung finden. Dabei ist insbesondere darauf hinzuweisen, dass unterschiedliche Ladepunkte mit unterschiedlichen elektrischen Leistungen versorgt werden können bzw. in manchen Ladesituationen sogar müssen. Dies kann u. a. auch in flexibler Weise sein, wenn beispielsweise an zwei Ladepunkten unterschiedliche Fahrzeuge unterschiedliche elektrische Ladungsleistungen benötigen. Auch ist es jedoch denkbar, dass in konstruktiv fest ausgestalteter Weise die Transformatorvorrichtung unterschiedliche Ladepunkte mit immer unterschiedlicher elektrischer Leistung versorgen muss. In beiden Fällen sind die bekannten Transformatorvorrichtungen nur unzureichend auf diese Flexibilität ausgestaltet. So muss diese Flexibilität von vornherein in der Konstruktion berücksichtigt werden und mit entsprechender großer, komplexer und teurer Konstruktionstechnik in der Transformatorvorrichtung vorgesehen werden.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Flexibilität in dem Einsatz für eine Transformatorvorrichtung, insbesondere eine Transformatorvorrichtung für Split-Powerline-Systeme, zu erhöhen.

Die voranstehende Aufgabe wird gelöst durch eine Transformatorvorrichtung mit den Merkmalen des Anspruchs 1, eine Ladestation mit den Merkmalen des Anspruchs 8 und ein Verfahren mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Transformatorvorrichtung beschrieben sind, selbstverständlich auch im Zusammenhang mit der erfindungsgemäßen Ladestation sowie im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß bezeichnet eine Schaltlogik eine feste elektrische Verdrahtung beispielsweise mit Schraubverbindungen, Klemmverbindungen, Schweißverbindungen oder Lötverbindungen oder eine mit elektrischen Schaltern, elektrischen Steckverbindern oder dergleichen konfigurierbaren elektrischen Verschaltung.

Erfindungsgemäß wird eine Transformatorvorrichtung für eine Ladestation für das elektrische Laden von Fahrzeugen mit wenigstens zwei Ladepunkten vorgeschlagen. Diese Transformatorvorrichtung weist einen Eingangsanschluss für den elektrischen Anschluss an eine elektrische Leistungsquelle auf. Weiter werden zumindest eine Primärwicklung und zumindest drei galvanisch voneinander getrennte Sekundärwicklungen vorgesehen. Die Sekundärwicklungen sind über eine Schaltlogik mit wenigstens zwei Ausgangsanschlüssen der wenigstens zwei Ladepunkte verbunden. Die Schaltlogik verbindet wenigstens zwei Sekundärwicklungen elektrisch parallel mit einem Ausgangsanschluss eines Ladepunktes, sodass die zwei Sekundärwicklungen den Laststrom und damit die Ladeleistung des einen Ladepunktes gemeinsam bereitstellen. Eine solche Transformatorvorrichtung kann als rekonfigurierbarer Transformator verstanden werden. Dabei können mehrere leistungsschwächere Sekundärwicklungen eingesetzt werden, welche bei der Montage durch Klemmen, Schraubterminals oder ähnliches konfiguriert werden können. Auch können zwei Sekundärwicklungen parallel auf einen Anschluss gelegt werden.

Bei den Sekundärwicklungen kann es sich jeweils um ein- oder mehrphasige Wicklungen handeln. Vorteilhaft sind dabei in derzeit gebräuchlichen dreiphasigen Energiesystemen insbesondere dreiphasige Wicklungen, die beispielsweise in Stern- oder in Dreieckkonfiguration ausgeführt sein können. Ebenso kann eine Kombination von Stern- und Dreieckkonfiguration eingesetzt werden, um zumindest eine sechsphasige Sekundärwicklung zu bilden. Diese bietet den Vorteil, dass ein hieran angeschlossener Gleichrichter zwölfpulsig ausgeführt werden kann, um eine sehr geringe Stromwelligkeit und eine sehr geringe Netzrückwirkung zu erzeugen. Ferner lassen sich auch über sogenannte Zickzack-Wicklungen weitere Phasenanzahlen in Sekundärwicklungen erzeugen.

Erfindungsgemäß ist die Transformatorvorrichtung nun aufgeteilt in zwei wesentliche elektrische Abschnitte. Zum einen ist dies die Primärwicklung, welche als gemeinsame Wicklung für sämtliche Ladepunkte zur Verfügung gestellt ist. Leistung, welche in elektrischer Weise von der elektrischen Leistungsquelle zur Verfügung gestellt wird, durchläuft also in einem ersten Abschnitt diese wenigstens eine Primärwicklung. Magnetisch mit der wenigstens einen Primärwicklung gekoppelt sind nun zumindest drei galvanisch voneinander getrennte Sekundärwicklungen vorgesehen, welche spezifisch für die einzelnen Ladepunkte sind. Mithilfe der Schaltlogik sind nun wenigstens zwei dieser zumindest drei Sekundärwicklungen elektrisch parallel mit einem einzigen und gemeinsamen Ausgangsanschluss eines Ladepunktes verbunden. Das bedeutet also, dass zumindest zwei Sekundärwicklungen elektrisch parallel zusammengeschaltet sind, um mithilfe der Schaltlogik einen einzelnen Ausgangsanschluss eines einzelnen Ladepunktes hier mit wenigstens zwei Sekundärwicklungen zu versorgen.

Wie in der voranstehenden Erläuterung entnommen werden kann, wird die Komplexität bzw. die Unterschiedlichkeit der einzelnen Ladepunkte nun nicht mehr in konstruktiver Weise durch Sekundärwicklungen oder Primärwicklungen in der Transformatorvorrichtung zur Verfügung gestellt. Vielmehr wird die Komplexität und damit auch die Flexibilität durch die Schaltlogik in der Transformatorvorrichtung ausgestaltet und kann insbesondere in später noch erläuterten Details einfach, kostengünstig und vor allem reversibel zur Verfügung gestellt sein. Die Schaltlogik erlaubt es nun, nicht mehr nur eine einzelne Sekundärwicklung explizit und gezielt auf einen einzelnen Ladepunkt und einen einzelnen Ausgangsanschluss zu verbinden. Vielmehr ist auch eine Kombination von wenigstens zwei oder mehr Sekundärwicklungen in elektrisch paralleler Weise über die Schaltlogik möglich, um somit eine Erhöhung der elektrischen Leistung und damit auch ein unsymmetrisches Ladeverhalten zwischen unterschiedlichen Ausgangsanschlüssen und damit auch zwischen unterschiedlichen Ladepunkten, beispielsweise einen dedizierten Hochleistungsladepunkt und einen Ladepunkt mit geringerer Ladeleistung, zur Verfügung stellen zu können.

Insbesondere, wenn unterschiedliche Leistungen an unterschiedlichen Ladepunkten benötigt werden, kann mithilfe der Schaltlogik eine Kombination von zwei oder mehr Sekundärwicklungen erfolgen, welche zum Beispiel eine gleiche oder eine ähnliche Einzelleistung aufweisen. Durch das elektrische Parallelschalten der einzelnen Sekundärwicklungen erfolgt damit eine Erhöhung der gesamten Ausgangsleistung in Summe, welche nun am Ausgangsanschluss des jeweiligen Ladepunktes in kombinierter Weise über die Schaltlogik zur Verfügung gestellt worden ist. Die Flexibilität in der Schaltlogik führt nun dazu, dass auch eine Transformatorvorrichtung mit festen und konstruktiv eingebauten Sekundärwicklungen in flexibler Weise an unterschiedlichste Ladepunktsituationen bzw. elektrische Ladesituationen angepasst werden kann.

Unter einem Ladepunkt ist dabei in erfindungsgemäßer Weise insbesondere eine elektrische Zapfsäule zu verstehen, also zum Beispiel ein Ausgangsanschluss in Form eines Ladesteckers, welcher in eine Ladebuchse eines elektrisch zu ladenden Fahrzeugs eingesteckt werden kann. Die Kombination mithilfe der Schaltlogik kann dabei sowohl reversibel, als auch irreversibel erfolgen. Bevorzugt ist jedoch eine reversible, insbesondere eine flexible Ausgestaltung der Schaltlogik, wie sie später noch erläutert wird.

Weiter von Vorteil ist es, wenn bei einer erfindungsgemäßen Transformatorvorrichtung die Schaltlogik wenigstens eine Kombinationsschaltung aufweist, welche wenigstens zwei Sekundärwicklungen miteinander auf einen Ausgangsanschluss kombiniert. Die Schaltlogik dient also dazu mit einer festen Kombinationsschaltung die Kombination zur Verfügung zu stellen, so dass insbesondere eine feste bzw. statische elektrische Schaltung als Kombinationsschaltung in der Schaltlogik zur Verfügung gestellt wird. Dabei kann es sich sowohl um eine reversible als auch um eine irreversible bzw. einmalige Einstellung handeln. Bevorzugt ist hier eine manuelle Einstellung in der Einrichtung der Transformatorvorrichtung bzw. der Schaltlogik zu verstehen.

Weiter von Vorteil ist es, wenn bei einer erfindungsgemäßen Transformatorvorrichtung diese Kombinationsschaltung als reversible Kombinationsschaltung ausgebildet ist. Mit anderen Worten kann in der Fertigung die Transformatorvorrichtung mit der Schaltlogik in Form wenigstens einer Kombinationsschaltung ausgestaltet werden. Diese kann zum Beispiel Steckkontakte, Klemm- oder Schraubkontakte zur parallelisierten Schaltung der einzelnen Sekundärwicklungen aufweisen. Die reversible Kombinationsschaltung in der Schaltlogik dient dazu, dass bei der Montagesituation an der jeweiligen Ladestation nun durch den Monteur in flexibler und freier Weise eine Anpassung dieser reversiblen Kombinationsschaltung an unterschiedlichste Ladesituationen erfolgen kann. Somit kann die reversible Kombinationsschaltung sowohl die Produktion durch gewisse Standardisierung als auch die Installation und Inbetriebnahme durch entsprechende Anpassungsfähigkeit vereinfachen. Soll die vorhandene Transformatorvorrichtung nun für drei Ladepunkte eingesetzt werden, so erfolgt eine entsprechende manuelle Anpassung dieser reversibel ausgebildeten Kombinationsschaltung auf ein Zueinanderschalten der Sekundärwicklungen auf drei Ausgangsanschlüsse und dementsprechend auf drei Ladepunkte. Wird dem entgegengesetzt eine höhere Anzahl von Ladepunkten bis zu der Anzahl der Sekundärwicklungen des Transformators gefordert, zum Beispiel sechs Ladepunkten, so kann bei der gleichen Transformatorvorrichtung die reversible Kombinationsschaltung manuell angepasst werden, so dass beispielsweise mithilfe eines Steckkombinators die Sekundärwicklungen nun sechs Ausgangsanschlüsse und damit sechs Ladepunkte ansteuern bzw. verbinden können.

Vorteilhaft kann es auch sein, wenn bei einer erfindungsgemäßen Transformatorvorrichtung die Schaltlogik eine Schaltmatrix aufweist für ein flexibles Kombinieren der Sekundärwicklungen auf die Ausgangsanschlüsse. Diese Schaltmatrix kann alternativ zu der Kombinationsschaltung sein, wie sie in den voranstehenden Absätzen erläutert worden ist. Jedoch ist auch eine Kombination einer festen oder reversiblen Kombinationsschaltung einerseits und einer flexiblen kombinierbaren Schaltmatrix andererseits im Sinne der vorliegenden Erfindung denkbar. Bevorzugt ist es, wenn die Schaltmatrix automatisch oder zumindest teilautomatisch angesteuert werden kann, wie dies später noch mit der Kontrolleinheit und in Zusammenhang mit dem erfindungsgemäßen Verfahren erläutert wird. Die Schaltmatrix erlaubt nun ein flexibles Kombinieren der Sekundärwicklungen, so dass nicht nur an die generelle konstruktive Ausgestaltung der jeweiligen Ladestation eine Anpassung erfolgen kann, sondern vielmehr auch unsymmetrische Ladesituationen durch ein Umschalten der Schaltmatrix in der Schaltlogik ausgeglichen werden können. Die Flexibilität im Einsatz für eine erfindungsgemäße Transformatorvorrichtung steigt damit weiter. In diesem Fall kann eine ausschließliche Ansteuerung im lastfreien also nahezu stromfreien Fall stattfinden, wodurch Schaltelemente der Schaltmatrix nicht in der Lage sein müssen, Ströme zu trennen. Mit geeigneten Schaltelementen kann eine solche Schaltmatrix jedoch auch für eine Umschaltung unter Last ausgeführt sein. Dabei kann es sich einerseits um mechanische Schalter, die Lichtbögen trennen können, geeignete Löschkammern aufweisen, Löschvorrichtungen vorsehen oder im Vakuum agieren, oder elektronische Schalter handeln, die entsprechende Freilaufschaltungen oder Entlastungsnetzwerke umfassen, um eine Stromabschaltung zu ermöglichen. Ebenso können elektronische Schalter mit mechanischen Schaltern derart kombiniert werden, dass die elektronischen Schalter die Stromabschaltung durchführen und die mechanischen Schalter im offenen lediglich eine Trennung oder im geschlossenen Zustand den vorwiegenden leitenden Pfad bereitstellen. Die mechanischen Schalter müssen in diesem Fall nicht in der Lage sein, den Strom zu trennen. Beispielsweise können elektronische Schalter und mechanische Schalter hierfür elektrisch parallel konfiguriert sein. Im angeschalteten Zustand leiten die mechanischen Schalter den überwiegenden Strom während die elektronischen Schalter vorzugsweise geöffnet sind. Für eine Abschaltung werden die elektronischen Schalter vorerst leitend geschaltet, anschließend die mechanischen Schalter geöffnet, damit der Strom vollständig auf die elektronischen Schalter kommutiert, woraufhin die elektronischen Schalter geöffnet werden, um den Stromfluss zu unterbinden.

Weiter von Vorteil ist es, wenn bei einer erfindungsgemäßen Transformatorvorrichtung die Schaltmatrix eine Kontrolleinheit aufweist für die Kontrolle der Leistungsabnahme an den Ausgangsanschlüssen und eine Anpassung der Kombination der Sekundärwicklungen auf Basis dieser Kontrolle. Die Kontrolleinheit kann zum Beispiel über Sensormittel und Kontrollmittel verfügen, welche eine automatische und/oder reversible Kontrolle durchführen können. Erkennt die Kontrolleinheit beispielsweise eine erhöhte Leistungsabnahme an einem Ausgangsanschluss an einem entsprechenden Ladepunkt, so kann über flexible Anpassung und nun flexible Schaltkombinatorik das Hinzuschalten von einem weiteren oder mehreren weiteren Sekundärwicklungen die zur Verfügung gestellte Leistung an diesem einen Ausgangsanschluss erfolgen. Mit anderen Worten wird eine erhöhte Leistungsanfrage bzw. eine erhöhte Leistungsabnahme, zum Beispiel bei besonders leerer Batterievorrichtung im zu ladenden elektrischen Fahrzeug, mit einer Erhöhung der zur Verfügung gestellten Leistung an diesem Ladepunkt gekontert. Die Flexibilität im Einsatz und insbesondere die möglichst passgenaue Aufteilung der vorhandenen elektrischen Leistung am Eingangsanschluss auf die einzelnen Ausgangsanschlüsse kann damit deutlich verbessert werden. Der Komfort und vor allem auch die Ladegeschwindigkeit für das elektrische Laden der einzelnen Fahrzeuge kann damit deutlich gesteigert und somit die Akzeptanz beim Nutzer einer solchen Ladestation verbessert werden. Somit steht vorzugsweise immer die ideale Leistung an dem jeweiligen Ladepunkt an, welche tatsächlich an diesem Ladepunkt zum aktuellen Zeitpunkt auch benötigt wird.

Vorteilhaft ist es darüber hinaus, wenn bei einer erfindungsgemäßen Transformatorvorrichtung die Sekundärwicklungen für eine identische oder im Wesentlichen identische Leistungsstufe ausgelegt sind. Eine solche Leistungsstufe kann zum Beispiel 160 kVA sein. Eine Stückelung in 160-kVA-Einheiten hat sich für das Hochleistungsladen von Elektrofahrzeugen als sehr vorteilhaft erwiesen. Die einzelnen Sekundärwicklungen können in modularer Weise ausgebildet und einfach in axialer oder radialer Richtung kombiniert werden. Die Reduktion auf eine einzige Leistungsstufe führt in der Fertigung dazu, dass die Sekundärwicklungen als Basismodule vorgefertigt werden können, und je nach Größe der Transformatorvorrichtung einfach in axialer Richtung aneinandergereiht werden. Damit können unterschiedlich große Transformatorvorrichtungen in modularer Weise einfach und kostengünstig zur Verfügung gestellt werden. Die Aneinanderschaltung bzw. die Leistungszusammenschaltung erfolgt nun über das kleinste gemeinsame Vielfache dieser einzelnen identischen bzw. im Wesentlichen identischen Leistungsstufen, so dass eine hohe Flexibilität in der Leistungszusammenschaltung durch die Schaltlogik zur Verfügung gestellt werden kann.

Weiter von Vorteil ist es, wenn bei einer erfindungsgemäßen Transformatorvorrichtung der Eingangsanschluss als eine zentrale Anschlussplatte ausgestaltet ist. Eine solche zentrale Anschlussplatte führt zu einer weiteren Reduktion der Komplexität und insbesondere zu einer weiteren Reduktion des Herstellaufwandes, der Kosten und des Bauraums bzw. des Gewichts einer solchen Transformatorvorrichtung.

Ebenfalls Gegenstand der vorliegenden Erfindung ist eine Ladestation für das elektrische Laden von Fahrzeugen, aufweisend wenigstens zwei Ladepunkte und zumindest eine erfindungsgemäße Transformatorvorrichtung. Damit bringt eine erfindungsgemäße Ladestation die gleichen Vorteile mit sich, wie sie ausführlich mit Bezug auf eine erfindungsgemäße Transformatorvorrichtung erläutert worden sind.

Ebenfalls Gegenstand der vorliegenden Erfindung ist ein Verfahren für das Anpassen einer Transformatorvorrichtung gemäß der vorliegenden Erfindung an eine Ladesituation an einer Ladestation gemäß der vorliegenden Erfindung, aufweisend die folgenden Schritte:
- Verbinden eines Ausgangsanschlusses eines Ladepunktes in elektrisch paralleler Weise mit wenigstens zwei Sekundärwicklungen mittels der Schaltlogik.

Durch das Anwenden eines Verfahrens auf eine erfindungsgemäße Ladestation bzw. auf eine erfindungsgemäße Transformatorvorrichtung werden die gleichen Vorteile erzielt, wie sie ausführlich mit Bezug auf die erfindungsgemäße Ladestation bzw. mit Bezug auf die erfindungsgemäße Transformatorvorrichtung erläutert worden sind.

Ein erfindungsgemäßes Verfahren lässt sich dahingehend weiterbilden, dass mittels einer Kontrolleinheit eine Kontrolle der Leistungsabnahme an den Ausgangsanschlüssen erfolgt und auf Basis des Kontrollergebnisses eine Anpassung der Kombination der Sekundärwicklungen durchgeführt wird. Die Flexibilität im Einsatz der Kontrolleinheit wird damit erhöht, so dass die Transformatorvorrichtung auch unterschiedlichen und insbesondere asymmetrischen Leistungsabnahmesituationen an den einzelnen Ladepunkten Rechnung tragen kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Transformatorvorrichtung,
- Fig. 2: eine weitere Ausführungsform einer erfindungsgemäßen Transformatorvorrichtung, und
- Fig. 3: eine weitere Ausführungsform einer erfindungsgemäßen Transformatorvorrichtung, welche in das öffentliche Energienetz eingebunden ist.

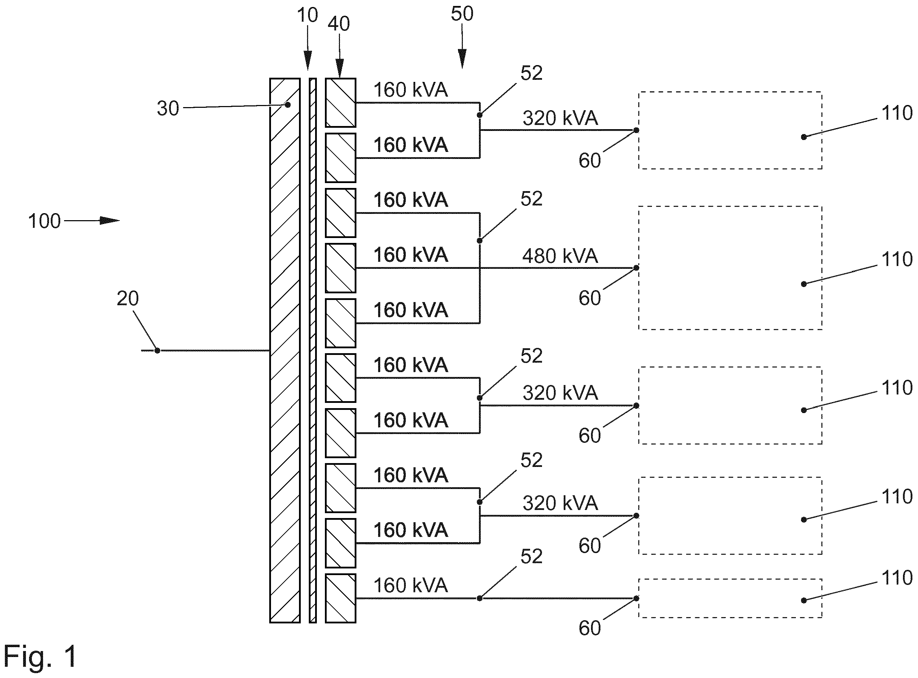

Fig. 1 zeigt schematisch, wie über einen gemeinsamen Eingangsanschluss 20 eine externe elektrische Leistungsquelle eine Primärwicklung 30 mit elektrischem Strom versorgen kann. Die Ladestation 100 ist hier mit insgesamt fünf Ladepunkten 110 ausgestattet, die über jeweils einen eigenen Ausgangsanschluss 60 der Transformatorvorrichtung 10 mit elektrischer Leistung zum Laden versorgt werden.

Uber einen gemeinsamen Kern der Transformatorvorrichtung 10 ist hier nun eine Vielzahl einzelner Sekundärwicklungen 40 gewickelt. Die einzelnen Sekundärwicklungen 40 sind alle mit einer identischen elektrischen Leistung in Form von 160 kVA ausgebildet. Dabei wird jedoch eine Schaltlogik 50 zur Verfügung gestellt, welche die einzelnen Sekundärwicklungen 40 in unterschiedlicher Weise miteinander kombiniert. Hier handelt es sich um eine reversible bzw. manuelle Kombinationsschaltung 52. Diese Kombinationsschaltung 52 der Schaltlogik 50 wird nachfolgend näher erläutert.

Von oben nach unten wird in dieser Ausführungsform nun eine Kombination der einzelnen Sekundärwicklungen 40 durchgeführt. Die oberste Kombinationsschaltung 52 kombiniert dabei zwei Sekundärwicklungen 40 und verdoppelt damit die Leistungsmöglichkeit auf 320 kVA am obersten Ausgangsanschluss 60 des obersten Ladepunktes 110. Der nächste Ladepunkt 110 und der zugehörige Ausgangsanschluss 60 kombiniert mithilfe der Kombinationsschaltung 52 drei Sekundärwicklungen 40 zu 480 kVA und damit der maximalen Leistungsabgabe innerhalb dieser Ladestation 100 der Fig. 1. Die nächsten beiden Ausgangsanschlüsse 60 sind wiederum identisch zum ersten Ausgangsanschluss 60 und kombinieren jeweils zwei Sekundärwicklungen 40 zu 320 kVA am jeweiligen Ladepunkte 110. Der unterste Ladepunkt 110 und damit auch der unterste Ausgangsanschluss 60 zeigt, dass auch eine Kombination einer einzigen Sekundärwicklung 40 und damit die einfache Zurverfügungstellung einer Ladungseinheit für das elektrische Laden am Ausgangsanschluss 60 möglich ist. Als wesentliches Charakteristikum dieser Ausführungsform der Erfindung kann eine nahezu beliebige elektrische Kombinatorik der Sekundärwicklungen 40 realisiert werden.

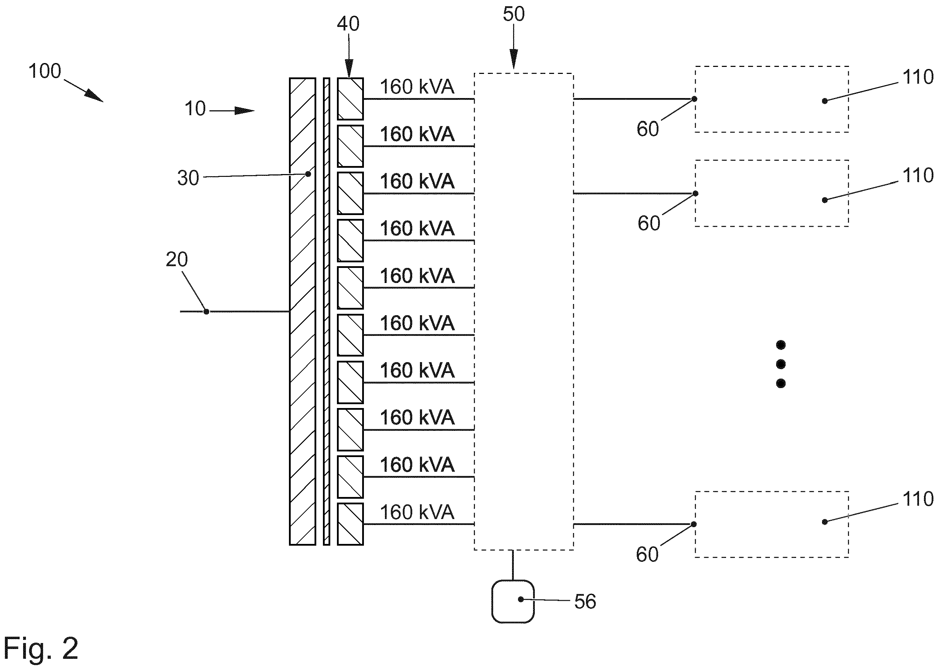

Während die Fig. 1 eine Ausführungsform der Transformatorvorrichtung 10 bzw. der Ladestation 100 zeigt, bei welcher insbesondere in manueller, zum Beispiel auch irreversibler Weise die Schaltlogik 50 eine Kombinationsschaltung 52 ausbildet, ist die Ausführungsform in der Fig. 2 deutlich flexibler zur Verfügung gestellt. Die Schaltlogik 50 ist hier mit einer Schaltmatrix 54 ausgestaltet. Gleichzeitig ist eine Kontrolleinheit 56 vorgesehen, um insbesondere eine Überwachung der Leistungsabnahme an den einzelnen Ausgangsanschlüssen 60 zur Verfügung zu stellen. So ist es auch hier möglich, eine Ausführungsform auszuführen, wie sie die Fig. 1 zeigt, in dem die Schaltmatrix 54 die gleiche Schaltung zur Verfügung stellt, welche die Kombinatorik der Fig. 1 und der dort dargestellten Ausführungsform nachbildet. Jedoch ist in flexibler Weise auch jede beliebige andere Kombinatorik der einzelnen Sekundärwicklungen 40 denkbar, um flexibel auf unterschiedliche Ladesituationen an den unterschiedlichen Ladepunkten 110 einzugehen und insbesondere die zur Verfügung gestellte elektrische Ladeleistung an den einzelnen Ausgangsanschlüssen 60 in flexibler Weise zu verändern bzw. an die tatsächliche Ladesituation anzupassen.

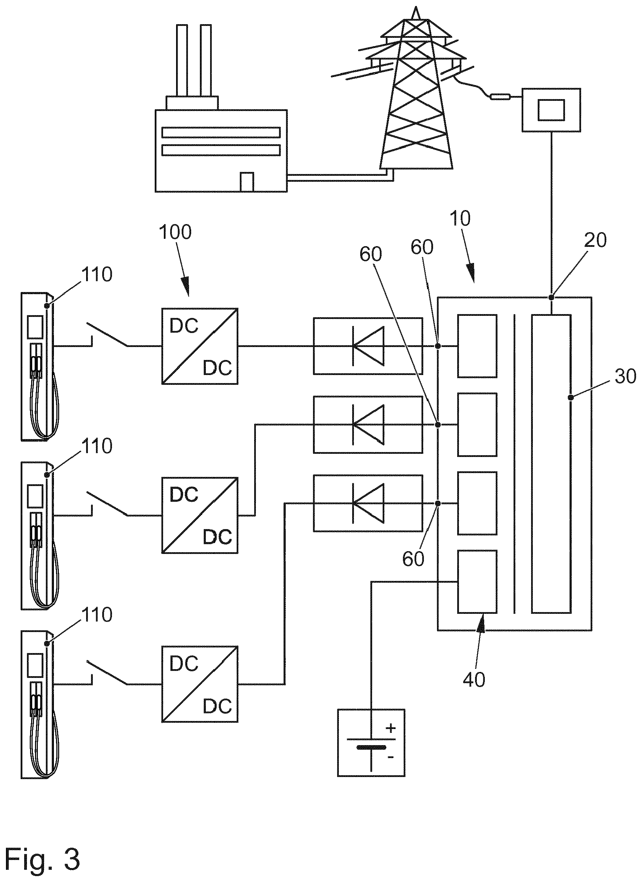

Die Fig. 3 zeigt eine Möglichkeit der Einbindung einer Transformatorvorrichtung 10 in das öffentliche Energienetz über den Eingangsanschluss 20. Über Primärwicklungen 30 und Sekundärwicklungen 40 kann über die Ausgangsanschlüsse 60 eine Lademöglichkeit an verschiedenen Ladepunkten 110 der Ladestation 100 ausgebildet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Transformatorvorrichtung (10) für eine Ladestation (100) für das elektrische Laden von Fahrzeugen mit wenigstens zwei Ladepunkten (110), aufweisend einen Eingangsanschluss (20) für den elektrischen Anschluss an eine elektrische Leistungsquelle, weiter aufweisend wenigstens eine Primärwicklung (30) und zumindest drei galvanisch voneinander getrennte Sekundärwicklungen (40), wobei die Sekundärwicklungen (40) über eine Schaltlogik (50) mit wenigstens zwei Ausgangsanschlüssen (60) der wenigstens zwei Ladepunkte (110) verbunden sind und die Schaltlogik (50) wenigstens zwei Sekundärwicklungen (40) elektrisch parallel mit einem Ausgangsanschluss (60) eines Ladepunktes (110) verbindet.

2. Transformatorvorrichtung (10) nach Anspruch 1, **dadurch gekennzeichnet, dass** die Schaltlogik (50) wenigstens eine Kombinationsschaltung (52) aufweist, welche wenigstens zwei Sekundärwicklungen (40) miteinander auf einen Ausgangsanschluss (60) kombiniert.

3. Transformatorvorrichtung (10) nach Anspruch 2, **dadurch gekennzeichnet, dass** die Kombinationsschaltung (52) als reversible Kombinationsschaltung (52) ausgebildet ist.

4. Transformatorvorrichtung (10) nach einem der vorangegangenen Ansprüche, **dadurch gekennzeichnet, dass** die Schaltlogik (50) eine Schaltmatrix (54) aufweist für ein flexibles kombinieren der Sekundärwicklungen (40) auf die Ausgangsanschlüsse (60).

5. Transformatorvorrichtung (10) nach Anspruch 4, **dadurch gekennzeichnet, dass** die Schaltmatrix (54) eine Kontrolleinheit (56) aufweist für die Kontrolle der Leistungsabnahme an den Ausgangsanschlüssen (60) und eine Anpassung der Kombination der Sekundärwicklungen (40) auf Basis der Kontrolle.

6. Transformatorvorrichtung (10) nach einem der vorangegangenen Ansprüche, **dadurch gekennzeichnet, dass** die Sekundärwicklungen (40) für eine identische oder im Wesentlichen identische Leistungsstufe ausgelegt sind.

7. Transformatorvorrichtung (10) nach einem der vorangegangenen Ansprüche, **dadurch gekennzeichnet, dass** der Eingangsanschluss (20) als eine zentrale Anschlussplatte ausgebildet ist.

8. Ladestation (100) für das elektrische Laden von Fahrzeugen, aufweisend wenigstens zwei Ladepunkte (110) und eine Transformatorvorrichtung (10) mit den Merkmalen eines der Ansprüche 1 bis 7.

9. Verfahren für das Anpassen einer Transformatorvorrichtung (10) mit den Merkmalen eines der Ansprüche 1 bis 7 an eine Ladesituation an einer Ladestation (100) mit den Merkmalen des Anspruchs 8, aufweisend die folgenden Schritte:
- Verbinden eines Ausgangsanschlusses (60) eines Ladepunktes (110) in elektrisch paralleler Weise mit wenigstens zwei Sekundärwicklungen (40) mittels der Schaltlogik (50).

10. Verfahren nach Anspruch 9, **dadurch gekennzeichnet, dass** mittels einer Kontrolleinheit (56) eine Kontrolle der Leistungsabnahme an den Ausgangsanschlüssen (60) und auf Basis des Kontrollergebnisses eine Anpassung der Kombination der Sekundärwicklungen (40) erfolgt.
